# EUROPEAN PATENT APPLICATION

(11) **EP 2 000 447 A2**
(43) Date of publication of application: **10.12.2008**
(21) Application number: 07739155.5
(22) Date of filing: 20.03.2007
(51) Int. Cl.: C04B 35/64, H01J 9/24, H01J 61/30

(54) **SINTERED BODY, LIGHT EMITTING TUBE AND PROCESS FOR MANUFACTURING THE SAME**

(30) Priority: 24.03.2006 JP 2006082676; 19.07.2006 JP 2006197393; 01.11.2006 JP 2006297706; 19.03.2007 JP 2007070277
(71) Applicant: NGK INSULATORS, LTD., Nagoya-city, Aichi 467-8530 (JP)
(72) Inventor: YOSHIOKA, Kunihiko, Nagoya-city, Aichi 4678530 (JP); MATSUMOTO, Kazuhi, Nagoya-city, Aichi 4678530 (JP); OHASHI, Tsuneaki, Nagoya-city, Aichi 4678530 (JP); INOUE, Masakatsu, Nagoya-city, Aichi 4678530 (JP); IKAMI, Toshiichi, Nagoya-city, Aichi 4678530 (JP); WATANABE, Keiichiro, Nagoya-city, Aichi 4678530 (JP)
(74) Representative: Paget, Hugh Charles Edward
(86) International application number: PCT/JP2007/055712
(87) International publication number: WO 2007/111199

(57) **Abstract**

The present invention provides a sintered body of a joined body including two or more inorganic powder-molded bodies. The sintered body includes first components corresponding to the two or more inorganic powder-molded bodies in the joined body; and a second component corresponding to a junction in the joined body, and has one or both of the features (a) and (b): (a) the second component has a surface roughness equal to or lower than that of each of the first components; and (b) the second component has, in the vicinity of a width center thereof, a transmittance equal to or higher than that of each of the first components.

## Description

### Technical Field

The present invention relates to a sintered body in which a plurality of inorganic powder-molded bodies are integrated, an arc tube, and a method for manufacturing the sintered body.

### Background Art

Ceramics, refractory metals, and ceramic-metal composites are usually manufactured by sintering starting material powders, and thus, shape forming of a product is performed mainly at the time of molding. However, ease of shape-forming depends on the molding method employed. For example, a disc-shaped product is easily formed using a mold-pressing method. In the case of a product with a complicated shape, a method is used in which a bulk body is compressed into a preform by means of cold isostatic press (CIP), and then a shape is formed by machining.

Gel-casting is a method in which a liquid slurry containing inorganic powder is solidified by a chemical reaction between organic compounds contained in the slurry to produce an inorganic powder-molded body. Since a mold can be transferred with high accuracy, this method is excellent for shape-forming with high accuracy. However, in the case of a product with a closed structure, it is not possible to use this method because mold release cannot be performed, or it is necessary to separately prepare a core to form an inner surface shape as in a lost wax process.

In particular, in a product in which the hole diameter at the end is smaller than the internal diameter of the middle part, such as an arc tube for a metal halide lamp or an arc tube for a high-pressure sodium lamp, it is difficult to improve productivity. It is conceivable that components constituting an arc tube are divided into small parts so that each part has a simple shape, and each of the individual parts is produced by extrusion molding, dry bag pressing, or mold pressing. In such a case, a method may be used in which, using a difference in firing shrinkage ratio between the plurality of parts, integration is performed during sintering. Furthermore, a previously integrated body may be produced by gel-casting in which a core is separately formed, and a slurry is cast into a space between the core and an outer mold (see Domestic Re-publication of International Application No. WO2002-085590A1, hereinafter referred to as Patent
Document 1; and International Application Publication No. WO2005-028710A1, hereinafter referred to as Patent Document 2).

As a method in which a plurality of parts are formed separately and bonded together to form an integrated body, a method is described in PCT Japanese Translation Patent Publication No. 2004-519820 (hereinafter referred to as Patent Document 3). In this bonding method, an organic binder is incorporated into each ceramic body, and by heating a joint surface of a first ceramic body and a joint surface of a second ceramic body simultaneously, the organic binder is locally melted. With the binder being locally melted, the joint surfaces of the first and second ceramic bodies are brought into contact with each other, and a region of the interface between the two joint surfaces is subjected to compression and expansion alternately to integrate the joint surfaces.

### Disclosure of the Invention

However, in the method in which a plurality of parts are separately formed, and the different parts are fitted together and integrally sintered using a difference in firing shrinkage ratio, the steps are complicated, and it is difficult to improve productivity. In the gel-casting methods described in Patent Documents 1 and 2, it is difficult to achieve both high shape accuracy and high productivity.

Furthermore, in the method described in Patent Document 3, since a meltable binder is used, the molded body is easily deformed during bonding or in the degreasing process. In this technique, bonding is performed by heating the junction. However, it is substantially impossible to restrict a buffer zone to the junction interface only, and a region extending several millimeters from the junction is deformed, and develops a buffer effect. Consequently, the shape is easily changed, and deformed portions have a significantly increased thickness, resulting in a decrease in transmittance. Furthermore, since a process of subjecting the joint surfaces of two molded bodies to compression/expansion is required, the production cost is increased. In particular, when thin portions of two molded bodies are butt-joined to each other, it is extremely difficult to perform the compression/expansion process on the joint surface. Furthermore, molded bodies to be bonded are obtained substantially by wax extrusion, and since dewaxing is time-consuming, there is a decrease in productivity. Furthermore, in the method according to Patent Document 3, the junction tends to swell or deform, and also, because of repeated stress occurring in the compression/expansion process, the surface of the junction may become roughened as the material swells. As a result, there is a possibility that the surface roughness of the junction may increase or the translucency of the junction may decrease. Furthermore, for example, when swelling or deformation of the junction is decreased to prevent the decrease in translucency, defects easily occur during melt integration of molded bodies, resulting in a decrease in the strength of the joined body.

It is an object of the present invention to provide methods for manufacturing a joined body of inorganic powder-molded bodies, a sintered body, and an arc tube, in which defects at the junction can be suppressed or avoided. It is another object of the present invention to provide a sintered body excellent in terms of the surface roughness, transparency, or surface smoothness of the junction, and an arc tube including the sintered body.

The present inventors have studied the problems described above and have found that it is possible to obtain a joined body of inorganic powder-molded bodies while suppressing or avoiding deformation or an increase in the surface roughness of the junction, and have also found that, by sintering such a joined body, it is possible to obtain a sintered body excellent in terms of the surface roughness, translucency, and surface smoothness of the junction. On the basis of these findings, the following means are provided.

The present invention provides a sintered body of a joined body including two or more inorganic powder-molded bodies, the sintered body including: first components corresponding to the two or more inorganic powder-molded bodies in the joined body; and a second component corresponding to a junction in the joined body, where the sintered body has one or both of the features (a) and (b): (a) the second component has a surface roughness equal to or lower than that of each of the first components; and (b) the second component has, in the vicinity of a width center thereof, a transmittance equal to or higher than that of each of the first components.

In the sintered body of the invention, the second component may have a surface roughness satisfying the relationship 0.01 µm ≤ Ra ≤ 2 µm. The second component may have, in the vicinity of a width center thereof, a transmittance of 80% or more.

The present invention also provides a sintered body of a joined body including two or more inorganic powder-molded bodies, the sintered body including: first components corresponding to the two or more inorganic powder-molded bodies in the joined body; and a second component corresponding to a junction in the joined body, where the second component has a surface roughness satisfying the relationship 0.01 µm ≤ Ra ≤ 2 µm and/or the second component has, in the vicinity of a width center thereof, a transmittance of 80% or more.

In the sintered bodies of the invention, the second component may be not protruding from the surface of the sintered body, exceeding the surface of each of the first components. The second component may have a width in a range of 10 to 2,000 µm. The ratio of the width of the second component to the thickness of each of the first components may be 1 or less. The sintered bodies of the invention may have a hollow portion.

In the sintered bodies of the invention, the ratio of the average grain diameter of the second component to the average grain diameter of each of the first components may be in a range of 1.0 to 2.0. In this case, the average grain diameter of the second component may have a tendency to decrease from the center in the width direction of the second component toward each of the first components.

The present invention also provides a method for manufacturing a joined body including inorganic powder-molded bodies, the method including the steps of: forming a bonding slurry layer at least between a joint surface of a first inorganic powder-molded body and a joint surface of a second inorganic powder-molded body while maintaining a state in which surface tension acts, the bonding slurry layer being made of a non-self-curing bonding slurry containing inorganic powder; and drying the bonding slurry layer.

In this method of the invention, in the step of forming the bonding slurry layer, the bonding slurry layer may be formed while adjusting a distance between the joint surface of the first inorganic powder-molded body and the joint surface of the second inorganic powder-molded body, the distance being in a direction substantially perpendicular to the joint surfaces. Furthermore, the method of the invention may further include, prior to the step of forming the bonding slurry layer, a step of feeding the non-self-curing bonding slurry containing inorganic powder to at least one of the joint surface of the first inorganic powder-molded body and the joint surface of the second inorganic powder-molded body.

In this method for manufacturing a joined body of the invention, in the step of feeding the non-self-curing bonding slurry, the non-self-curing bonding slurry may be applied to the at least one of the joint surfaces by printing.

The present invention also provides a method for manufacturing a sintered body including the steps of: forming a bonding slurry layer at least between a joint surface of a first inorganic powder-molded body and a joint surface of a second inorganic powder-molded body while maintaining a state in which surface tension acts, the bonding slurry layer being made of a non-self-curing bonding slurry containing inorganic powder; drying the bonding slurry layer; and sintering a joined body in which the first inorganic powder-molded body and the second inorganic powder-molded body are bonded to each other with the dried bonding slurry layer therebetween.

The present invention also provides a sintered body manufactured by the method for manufacturing a sintered body described above.

The present invention further provides an arc tube including any of the sintered bodies described above. The arc tube may be used for a a metal halide lamp or a high-pressure sodium lamp. The present invention further provides an arc tube including any of the sintered bodies described above.

### Brief Description of the Drawings

Fig. 1 shows a plan view (upper) and a cross-sectional view (lower) of an example of a sintered body;
Fig. 2 is a schematic view of another example of a sintered body;
Fig. 3 shows various shapes of cross-section of a second component;
Figs. 4 (a) to 4 (d) show various examples of a second component, i.e., Fig. 4 (a) shows a linear pattern A which bisects a reaction tube in a direction perpendicular to the axial direction, Fig. 4(b) shows a linear pattern B which bisects a reaction tube along the axial direction, Fig. 4 (c) shows a linear pattern C which bisects a reaction tube along the axial direction so as to be orthogonal to the linear pattern B, and Fig. 4(d) shows a state in which the linear pattern B and the linear pattern C are orthogonal to each other;
Fig. 5 shows other linear patterns of a second component;
Fig. 6 shows various examples of a molded body part for forming a joined body;
Fig. 7 shows examples of application of a bonding slurry to molded bodies and a bonding method;
Fig. 8 shows a bonding method using a penetration pin; and
Fig. 9 shows observation results by a laser scanning microscope with respect to a junction portion and a molded body portion of a sintered body obtained in Example.

### Description of the Preferred Embodiments

The present invention relates to sintered bodies and manufacturing methods of the sintered bodies. According to an embodiment of the present invention, a sintered body is a sintered body of a joined body including two or more inorganic powder-molded bodies, and includes first components corresponding to the two or more inorganic powder-molded bodies in the joined body, and a second component corresponding to a junction in the joined body, wherein the sintered body has one or both of the features (a) and (b): (a) the second component has a surface roughness equal to or lower than that of each of the first components; and (b) the second component has, in the vicinity of a width center thereof, a transmittance equal to or higher than that of each of the first components.

According to another embodiment of the present invention, a sintered body is a sintered body of a joined body including two or more inorganic powder-molded bodies, and includes first components corresponding to the two or more inorganic powder molded bodies in the joined body, and a second component corresponding to a junction in the joined body, wherein the second component has a surface roughness of 2 µm or less and/or the second component has, in the vicinity of a width center thereof, a transmittance of 80% or more.

In the sintered body of the present invention, the second component corresponding to the junction of two or more inorganic powder-molded bodies has a surface roughness and/or a transmittance equal to or superior to that of the first component corresponding to the inorganic powder-molded body. Consequently, in the sintered body of the present invention, it is possible to suppress or avoid the adverse effect of bonding on the surface roughness and/or transmittance of the sintered body. Furthermore, since the second component has a surface roughness equal to or lower than a predetermined value and/or the second component has, in the vicinity of a width center thereof, a transmittance equal to or higher than a predetermined value, it is possible to suppress or avoid the adverse effect of bonding on the surface roughness and/or transmittance of the sintered body.

According to another embodiment of the present invention, a method for manufacturing a sintered body includes the steps of forming a bonding slurry layer at least between a joint surface of a first inorganic powder-molded body and a joint surface of a second inorganic powder-molded body while maintaining a state in which surface tension acts, the bonding slurry layer being made of a non-self-curing bonding slurry containing inorganic powder; drying the bonding slurry layer; and sintering a joined body in which the first inorganic powder-molded body and the second inorganic powder-molded body are bonded to each other with the dried bonding slurry layer therebetween.

In the manufacturing method of the sintered body of the present invention, the bonding slurry layer is formed between the joint surfaces while maintaining the state in which surface tension acts on the non-self-curing slurry containing inorganic powder, and then the bonding slurry layer is dried. Consequently, the (dried) junction obtained by drying can have surface roughness formed by the action of surface tension. By sintering the joined body provided with such a (dried) junction, it is possible to obtain a sintered body provided with the junction having excellent surface roughness and transmittance. Furthermore, since the (sintered) junction has a lower surface roughness than that of a sintered portion of the inorganic powder-molded body, it is possible to obtain a sintered body provided with the (sintered) junction having a higher transmittance than that of the sintered portion of the inorganic powder-molded body. Furthermore, by forming the bonding slurry layer in the state in which surface tension acts, it is possible to control the width of the junction obtained by drying (i.e., the length corresponding to the distance between the joint surfaces), the thickness of the junction (i.e., the length along the thickness of the molded body), and the surface shape. Consequently, it is possible to obtain (sintered) junctions having various forms.

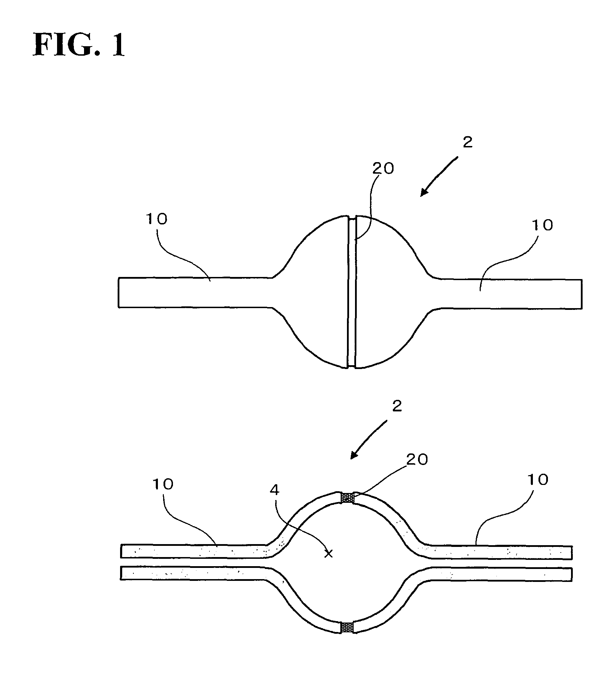

The present invention also relates to joined bodies and manufacturing methods thereof. A sintered body and a manufacturing method thereof and a joined body and a manufacturing method thereof according to the present invention will be described with reference to Figs. 1 to 6. Note that Figs. 1 to 6 each show an embodiment of the present invention.

### (Sintered body)

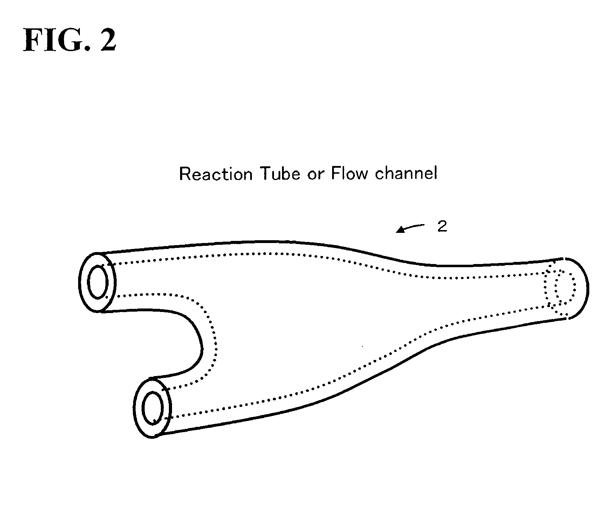

A sintered body 2 of the present invention may be a solid body or may have a hollow portion 4 provided at least partially. Since the present invention is useful in avoiding the use of a core, preferably, the sintered body 2 has the hollow portion 4. The hollow portion 4 may be open to outside or may be closed, or may include both an open portion and a closed portion. For example, the sintered body 2 may have a shape of tube of various types, a container shape, a dome shape, or a shape in which these are combined. Examples of a hollow body having a hollow portion for reaction or light emission include an arc tube shown in Fig. 1 and a reaction tube or a flow channel shown in Fig. 2. Typically, an arc tube, a reaction tube, a flow channel, or the like has a tubular structure as a whole including hollow portions having different sizes and shapes. In such a component, a relatively large hollow portion can constitute a light-emitting section, a reaction section, a reservoir section, a merging section, etc, and a relatively small or thin hollow portion can constitute a flow channel or a simple pipe. Furthermore, the sintered body 2 of the present invention can be used in various applications, for example, as structures having thermal shock resistance in thermal cycle engines, and observation windows of high-temperature furnaces and the like.

The sintered body 2 of the present invention is preferably used as an arc tube for a discharge lamp. High-voltage discharge lamps can be used for various illumination devices, such as automotive headlights, OHPs, and liquid crystal projectors. Examples of the arc tube include an arc tube for a metal halide lamp and an arc tube for a high-pressure sodium lamp. Examples of the arc tube for the high-pressure sodium lamp include recessed type, semi-closed type, top-hat type, and monolithic top-hat type arc tubes.

### (Constituent elements of sintered body)

As shown in Fig. 1, the sintered body 2 of the present invention can include two or more first components 10 and a second component 20. Each of the first components 10 and the second component 20 is a sintered part. The sintered body 2 of the present invention is a sintered body of a joined body including two or more inorganic powder-molded bodies. The first components 10 correspond to the two or more inorganic powder-molded bodies in the joined body, and the second component 20 corresponds to a junction of the inorganic powder-molded bodies in the joined body.

### (First component)

Each of the first components 10 is a sintered portion of the inorganic powder-molded body. Although a plurality of first components 10 can have different compositions, in order to produce an integrated sintered body 2, usually, the plurality of first components 10 preferably have the same composition. The composition of the first components 10 will be described later (under the subtitle "Manufacturing method of sintered body").

The first components 10 can have a hollow portion 4 provided at least partially as shown in Fig. 1, and the shape thereof is not limited. Although the first components 10 may have different shapes, etc., preferably, the first components are designed so as to have substantially the same thickness. The thickness of the first component 10 is not particularly limited, but is preferably in a range of about 300 to 2,000 µm. This range is suitable for securing translucency and obtaining sufficient strength. When transmittance is important, the thickness is more preferably in a range of 300 to 1,000 µm. In this range, it is possible to obtain a very high transmittance. When strength is important, the thickness is more preferably in a range of 1,000 to 2,000 µm. In this range, it is possible to obtain sufficient strength.

Preferably, the average surface roughness of the first component 10 satisfies the relationship 0.01 µm ≤ Ra ≤ 2 µm. In this range, the sintered body can be used as a reaction tube for carrying out a reaction using light. More preferably, the relationship 0.01 µm ≤ Ra ≤ 0.5µm is satisfied. In this range, it is possible to obtain sufficient transmittance as an arc tube. When the first components 10, which are sintered bodies of inorganic powder-molded bodies, have the same or substantially the same composition, the properties, such as surface roughness, are likely to become uniform. Note that the surface roughness is defined as Ra according to JIS B0601(2001). Furthermore, a contact type surface roughness meter, a non-contact type surface roughness meter, a laser scanning microscope, or the like is appropriately used depending on the obj ect to be measured, the extent of surface roughness, etc. In the present invention, preferably, the surface roughness is identified with a laser scanning microscope or the like.

Each of the first components 10 preferably has a transmittance of 80% or more. In this range, the sintered body can be used as a reaction tube for carrying out a reaction using light. More preferably, the transmittance is 90% or more. In this range, the sintered body can be used as a lamp arc tube. When the first components 10 are sintered bodies of inorganic powder-molded bodies having the same composition and have uniform thickness, the first components 10 have substantially uniform properties, such as uniform surface roughness. The transmittance can be measured by the method described below. That is, first, a light measurement apparatus is prepared, in which a parallel-light source, a microscope, and a light-receiving unit (CCD or the like) are arranged optically coaxially. In the light measurement apparatus, the light-receiving unit is installed in the microscope so that the amount of light in a very small region can be measured. In the light measurement apparatus, the transmittance is defined as the ratio of the measured amount of light transmitted through the first component 10 to the amount of light measured without placing anything between the light source and the light-receiving unit. When the amount of light transmitted through the first component 10 is measured, a test piece is used, the test piece being prepared by cutting out a portion of the first component 10 and having a size sufficiently larger than the measurement region of the light-receiving unit.

The number of the first components 10 may be two, as shown in Fig. 1, or may be more than two. Three or more first components may constitute the sintered body 2.

### (Second component)

The second component 20 corresponds to a junction between the inorganic powder-molded bodies corresponding to the first components 10. As will be described below, the second component 20 is obtained by a method in which a slurry layer containing inorganic powder is formed between joint surfaces of inorganic powder-molded bodies, and drying the slurry layer, followed by sintering. The second component 20 is also a sintered part. Thus, preferably, the second component 20 has the same or substantially the same composition as that of the first component 10. The composition of the second component 20 will be described in detail later (under the subtitle "Manufacturing method of sintered body").

The second component 20 in the sintered body 2 is a part reasonably considered as a junction between the first components 10 in the sintered body 2. Moreover, in terms of shape, the second component 20 is a region that can be distinguished from the first components 10 corresponding to the inorganic powder-molded bodies on the basis of surface roughness, transmittance, or the like, regardless of the presence or absence of linear recesses, protrusions, or irregularities in the surface of the sintered body 2.

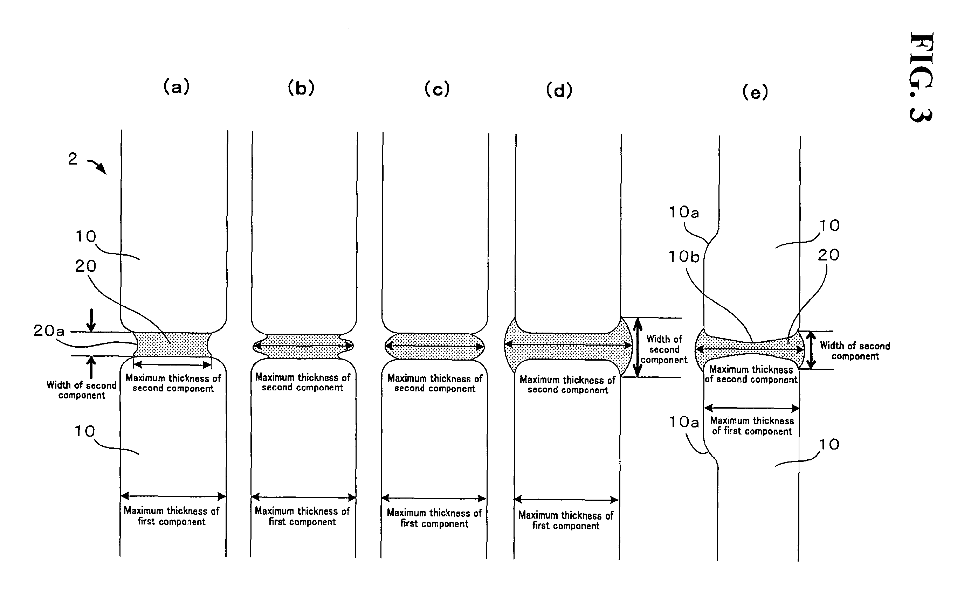

The maximum thickness of the second component 20 is not particularly limited, but is preferably in a range of 50% to 140% of the thickness of the first component 10. This range is suitable for securing translucency. Here, the thickness is defined as a length in the thickness direction of the first component 10. When a high transmittance is required, in terms of relationship with the thickness of the first component 10, preferably, the maximum thickness of the second component 20 does not exceed the thickness of the first component 10. By setting the thickness of the second component 20 so as not to exceed the thickness of the first component 10, it is possible to inhibit a decrease in the transmittance of the second component 20. However, a case where the maximum thickness of the second component 20 exceeds the thickness of the first component 10 is not eliminated. According to the present invention, since the surface roughness of the second component 20 is low, even if the thickness is large, it is possible to obtain a high transmittance. When a comparison is made with the thickness of the first component 10, preferably, the comparison is made with an average thickness of a portion of the first component 10 most adjacent to the second component 20. When an end of the first component 10 adjacent to the second component 20 has an increased thickness (refer to Fig. 3(e)), preferably, the average thickness of the portion with the increased thickness is considered as the average thickness of the first component.

Preferably, the second component 20 does not protrude from the surface of the sintered body 2, exceeding the surface of the first component 10. If a protrusion is present, the transmittance is easily decreased at the protrusion. However, a case where the second component 20 protrudes, exceeding the surface of the first component 10, is not eliminated.

The width of the second component 20 (i.e., the maximum length of the second component 20 along the direction of the distance between the joint surfaces of inorganic powder-molded bodies that correspond to the first components 10 and are opposed to each other) is not particularly limited, but is preferably in a range of 10 to 2, 000 µm. In this range, it is possible to easily form the second component 20 using a known method, such as, printing, dipping, or a method using a dispenser. The width of the second component 20 is appropriately selected depending on the formation method of the second component 20 or printing method selected according to the pattern to be formed.

Preferably, the ratio of the width of the second component 20 to the thickness of the first component 10 (width of second component 20/thickness of first component 10) is greater than 0 and less than or equal to 1. In this range, it is possible to secure roughly sufficient strength against thermal stress. More preferably, the ratio is greater than 0 and less than or equal to 0.5. If the ratio is equal to or less than 0.5, it is possible to secure sufficient strength against thermal stress regardless of the shape of cross-section of the second component 20 (e.g. , even in a cross-section that is entirely concaved inward from the surface of the sintered body 2). In order to determine the ratio of the width of the second component 20 to the thickness of the first component 10, preferably, a comparison is made with the average thickness of a portion of the first component 10 most adjacent to the second component 20.

The second component 20 may have any of various cross-sectional shapes between the first components 10. The reason for this is that, as will be described below, the second component 20 is produced by sintering a (dried) junction obtained by drying and solidifying a bonding slurry layer formed in a state in which surface tension acts. That is, the shape of the second component 20 follows the shape of the bonding slurry layer in which surface tension acts. In such a second component 20, the surface roughness is lower than that of the first component 10, and the transmittance is increased.

Fig. 3 shows various shapes of cross-section of such a second component 20. Fig. 3 (a) shows a shape of a second component 20 in which the second component 20 has a maximum thickness smaller than the thickness of the first component 10, and the second component 20 does not protrude outward from the first component 10. In this example, a surface 20a of the second component 20 has a surface shape concaved inward by the action of surface tension. Fig. 3(b) shows a shape of a second component 20 in which the second component 20 has a maximum thickness that is substantially the same as the thickness of the first component 10, and the second component 20 either protrudes or does not protrude outward from the first component 10 (including the case where the second component 20 is substantially flush with the first component 10). In this example, a surface 20a of the second component 20 has a surface shape in which only a portion in the vicinity of a center of the second component 20 protrudes outward. Fig. 3(c) shows a shape of a second component 20 in which the second component 20 has a maximum thickness that is substantially the same as the thickness of the first component 10, and the second component 20 does not protrude outward from the first component 10. In this example, a surface 20a of the second component 20 has a surface shape in which substantially the entire portion protrudes outward by the action of surface tension.
Fig. 3(d) shows a shape of a second component 20 in which the second component 20 has a maximum thickness larger than the thickness of the first component 10, and the second component 20 protrudes outward from the first component 10. In this example, a surface 20a of the second component 20 has a surface shape in which substantially the entire portion protrudes toward outward by the action of surface tension. In each of the three examples described above, the second component 20 fits into a space defined by the joint surfaces of the first components 10. In contrast, in this example, the second component 20 partially exceeds the space defined by the joint surfaces of the first components 10 and extends to the outer surfaces of the first components 10. Fig. 3(e) shows an example in which ends of first components 10 adjacent to a second component 20 have an increased thickness. Each of the first components 10 has an expanded portion 10a provided at an end adjacent to the second component 20, and has a protrusion 10b provided at a joint surface to be bonded to the second component 20. As in the example shown in Fig. 3(d), the second component 20 has a maximum thickness that is larger than the thickness of the first component 10 and protrudes outward from the first component 10. The shape of the second component 20 is not limited to that shown in Fig. 3(e), and preferably, a second component 20 shown in any of Figs. 3 (a) to 3(c) is provided. As described above, according to the present invention, the shape of the second component 20 can be controlled arbitrarily by adjusting the width and thickness of a bonding slurry applied, the distance between the molded bodies when bonding is performed, surface tension, and the wettability of the surface of the molded bodies.

The second component 20 corresponds to a junction between inorganic powder-molded bodies of a joined body, which is a precursor to the sintered body 2. Consequently, the second component 20 may have a joint shape disposed between two or more first components 10. Since the second component 20 is a junction, one second component 20 is present for two first components 10. When the sintered body 2 is a sintered body of a joined body in which three or more first components 10 are bonded to each other, two or more second components 20 are provided.

Since the second component 20 is present as such a joint, the second component 20 can have a linear pattern. Examples of the linear pattern of the second component 20 include a straight-lined pattern, a curved-pattern, a zigzag-pattern, and a wavy pattern, although not particularly limited thereto.

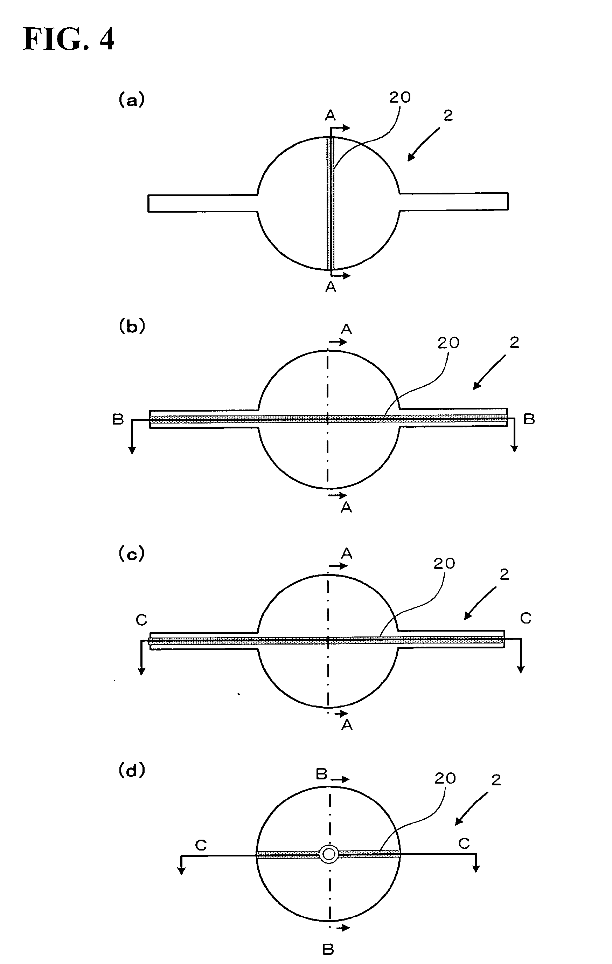

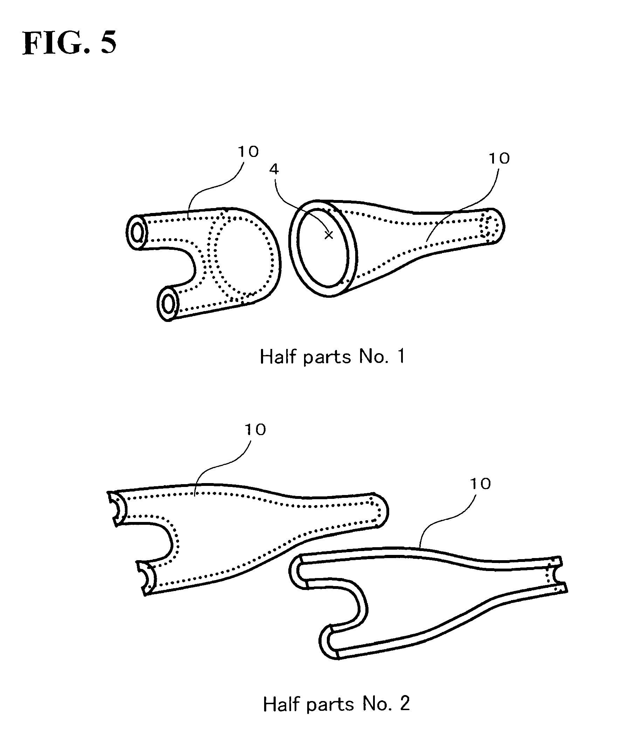

Examples of the linear pattern of the second component 20 are shown in Fig. 4 and Fig. 5. Fig. 4(a) shows a ring-like linear pattern A which bisects, in a direction perpendicular to the axial direction, a sintered body 2, which is shaped like a reaction tube, in the vicinity of the center of a hollow portion 4. Fig. 4 (b) shows a linear pattern B which bisects a sintered body 2 along the axial direction. Fig. 4(c) shows a linear pattern C which bisects a sintered body 2 along the axial direction so as to be orthogonal to the linear pattern B. Fig. 4(d) shows a state in which the linear pattern B and the linear pattern C are orthogonal to each other. By using any of these linear patterns or combining two or more of these linear patterns, a sintered body 2 can include two or three or more first components 10. Furthermore, as shown in Fig. 5, in a reaction tube or a flow channel, a linear pattern which bisects a sintered body in a direction perpendicular to the flow channel direction or a linear pattern which bisects a sintered body along the flow channel direction may be used.

Preferably, the average surface roughness of the second component 20 is equal to or lower than the average surface roughness of the first component 10. By setting the surface roughness of the second component 20 to be equal to or lower than the surface roughness of the first component 10, it is possible to improve the transmittance and strength of the second component 20 compared with the first component 10. Furthermore, the average surface roughness of the second component 20 is preferably in a.range of 0.01 µm ≤ Ra ≤ 2 µm. In this range, it is possible to secure the transmittance and the strength at certain levels or higher. When the relationship 1 µm < Ra ≤ 2 µm is satisfied, since the roughness of the second component 20 is equal to or lower than that of the first component 10, the second component 20 can be provided with a transmittance that is equal to or higher than that of the first component 10. When the relationship 0.5 µm < Ra ≤ 1 µm is satisfied, since the surface roughness of the second component 20 is lower than that of the first component 10, the second component 20 has excellent transmittance and high thermal stress resistance. Furthermore, when the relationship 0.01 µm ≤ Ra ≤ 0.5 µm is satisfied, the second component 20 has very good transmittance, and satisfactory strength can be obtained even if the thickness of the second component 20 is small. Note that surface roughness can be measured by the same method of measuring surface roughness with respect to the first component 10.

Preferably, the transmittance of the second component 20 is equal to or higher than the transmittance of the first component 10. By setting the transmittance of the second component 20 to be equal to or higher than the transmittance of the first component 10, it is possible to suppress or avoid defects due to a decrease in transmittance at the junction. Preferably, the transmittance of the second component 20 is measured in the vicinity of a width center of the second component 20. The reason for this is that the second component 20 has various cross-sectional shapes.

Preferably, the second component 20 has a transmittance of 80% or more. In this range, the transmittance is equal to that of the molded body portion, and it is possible to avoid the adverse effect of bonding on the transmittance. More preferably, the second component 20 has a transmittance of 90% or more. The transmittance of 90% or more is equal to or higher than the transmittance of the molded body portion, and it is possible to obtain a higher transmittance than the case in which a sintered body is produced without using a bonding step. The transmittance of the second component 20 can be measured in the same manner as in the transmittance of the first component 10 except that light transmitted through the second component 20 is measured. When the amount of light transmitted through the second component 20 is measured, a test piece is used, the test piece being prepared by cutting out a portion of the second component 20 and having a size sufficiently larger than the measurement region of the light-receiving unit.

The ratio of the average grain diameter of the second component to the average grain diameter of the first component (average grain diameter of second component/average grain diameter of first component) is preferably in a range of 1.0 to 2.0. In such a case, by setting the average grain diameter of the second component to be relatively large, it is possible to increase the mechanical strength of the second component at which stress is easily concentrated, and thus durability and reliability of the sintered body are improved. Furthermore, by setting the average grain diameter of the second component to be relatively large, it is possible to suppress light scattering at grain boundaries, and thus the translucency of the second component can be increased. This is particularly preferable when the sintered body is used in a lamp arc tube or a reaction tube in which heat or mechanical stress is easily concentrated at the second component. The average grain diameter of the second component is preferably in the range of 20 to 100 µm, and more preferably 60 µm or less. The reason for this is that if the average grain diameter is excessively increased, stress concentration in grain boundaries increases, which may result in a decrease in the strength of the entire crystal structure. The average grain diameter is obtained by the method described below. First, a surface of the sintered body is photographed using a laser scanning microscope in a field of view which contains about 20 to 200 crystal grains, and the total number of crystal grains contained in the resulting micrograph is counted. At this time, a crystal grain present in the periphery of the field of view is counted as 0.5 pieces. Subsequently, the area of the field of view is divided by the total number of crystal grains contained in the field of view to give an average grain cross-section area. Assuming that the grain cross section is circular, the diameter is calculated from the average grain cross-section area. This value is considered as an average grain diameter. Preferably, the average grain diameter in the vicinity of the center in the width direction is larger than other regions. In such a case, since relatively large crystal grains are present in the center in the width direction of the second component serving as the junction, the presence of grain boundaries in the center in the width direction is reduced, and thus the mechanical strength can be further increased. Furthermore, more preferably, the average grain diameter has a tendency to decrease from the center in the width direction toward the first component. That is, when there is a boundary which separates a region of relatively large crystal grains from a region of relatively small crystal grains, stress concentrates at the boundary. In contrast, when the crystal grain size changes with a gradient, it is possible to suppress microscopic stress concentration at the boundary, and the strength of the second component can be further increased. Although the mechanism in which the average grain diameter of the second component becomes larger than the average grain diameter of the first component is uncertain, the reason for this is considered as follows. For example, when a sintered body of the present invention is produced using molded bodies (before sintering) corresponding to the first components and a bonding slurry (before sintering) corresponding to the second component, the difference in the average grain diameter between the first component and the second component is believed to be influenced by the difference in the powder packing ratio between the bonding slurry and the molded bodies, the increase of the powder packing ratio of the second component caused by the fact that the molded bodies absorb the solvent in the bonding slurry, the difference in the firing shrinkage ratio between the second component and the first component, stress occurring during firing shrinkage, the difference in additive elements between the bonding slurry and the molded bodies, and the like.

### (Manufacturing method of sintered body)

A preferred method for manufacturing a sintered body according to the present invention will now be described below. In the manufacturing method of the sintered body according to the present invention, first, it is necessary to prepare a joined body which is a precursor to a sintered body. First, a joined body and manufacturing method thereof will be described below.

### (Preparation of inorganic powder-molded body)

In a method for manufacturing a joined body according to the present invention, first, two or more inorganic powder-molded bodies to be bonded to constitute a joined body 40 are prepared. Various methods have been known for forming such inorganic powder-molded bodies, and the inorganic powder-molded bodies can be obtained easily using any of these methods. For example, as a method for forming inorganic powder-molded bodies used in the method of the present invention, gel-casting may be used in which a molding slurry containing inorganic powder and organic compounds are cast and solidified by a chemical reaction between the organic compounds, for example, a chemical reaction between a dispersion medium and a gelling agent or between gelling agents, and then mold releasing is performed. Such a molding slurry contains, in addition to starting material powder, a dispersion medium and a gelling agent, and may also contain a dispersant and a catalyst for adjusting viscosity and solidification reaction. Such a molding method is also described in Patent Documents 1 and 2, etc. The individual components will be described in detail below.

### (Starting material powder)

The powder component in the inorganic powder contained in the inorganic powder-molded body is not particularly limited, and may be a ceramic powder, a metal powder, a glass powder, or a mixture of two or more of these. Examples of the ceramic powder include alumina, aluminum nitride, zirconia, YAG, and a mixture of two or more of these. Preferably, each of the powder components has a purity of 99% or more. Components for improving sinterability and characteristics can be incorporated into the starting material powder, and examples thereof include Mg, Y, Zr, Sc, La, Si, Na, Cu, Fe, and Ca, or oxides of these elements. In particular, as a sintering aid, for example, magnesium oxide is used, and preferably, ZrO₂, Y₂O₃, La₂O₃, or Sc₂O₃ is used. Examples of the metal powder include molybdenum, tungsten, and alloys of these metals.

### (Dispersion medium)

As a dispersion medium, preferably, a reactive dispersion medium is used. For example, use of an organic dispersion medium having a reactive functional group is preferable. The organic dispersion medium having a reactive functional group preferably satisfies the following two conditions: (1) the organic dispersion medium chemically bonds with a gelling agent, which will be described below, i.e., the organic dispersion medium is a liquid substance capable of solidifying the slurry; and (2) the organic dispersion medium is a liquid substance capable of forming a slurry with high fluidity that is easily cast. In order to form a chemical bond with the gelling agent and to solidify the slurry, preferably, the organic dispersion medium has a reactive functional group, such as a hydroxy group, a carboxyl group, or amino group, capable of forming a chemical bond with the gelling agent in its molecule.

The organic dispersion medium may have one or two or more reactive functional groups in its molecule. When the organic dispersion medium has two or more reactive functional groups, a more satisfactory solidification state can be obtained. The organic dispersion medium having two or more reactive functional groups includes polyhydric alcohols (for example, diols, such as ethylene glycol; and triols, such as glycerin), and polybasic acids (for example, dicarboxylic acids). The reactive functional groups in the molecule are not necessarily the same, and may be different. Furthermore, many reactive functional groups may be present in the molecule, such as in polyethylene glycol.

In order to form a slurry with high fluidity that can be easily cast, it is preferable to use an organic dispersion medium having a viscosity as low as possible. In particular, it is preferable to use a substance having a viscosity of 20 cps or lower at 20°C.

Since the polyhydric alcohols and polybasic acids described above may have a high viscosity due to formation of hydrogen bonds, in some cases, even if the slurry can be solidified, the polyhydric alcohols and polybasic acids are not suitable as a reactive dispersion medium. Consequently, it is preferable to use, as the organic dispersion medium, an ester having two or more ester groups, such as a polybasic ester (for example, dimethyl glutarate), an ester of a polyhydric alcohol (for example, triacetin), or the like. Furthermore, it is effective to use a polyhydric alcohol or a polybasic acid, in an amount that does not greatly increase the viscosity of the slurry, for the purpose of reinforcement.

Furthermore, although relatively stable, an ester is capable of satisfactorily reacting with a gelling agent having high reactivity, and the ester can satisfy the two conditions described above because of its low viscosity. In particular, an ester having 20 or less carbon atoms has low viscosity, and thus can be used suitably as a reactive dispersion medium.

Specific examples of such a reactive functional group-containing organic dispersion medium include nonionic esters, alcohol ethylene oxides, amine condensates, nonionic, special amide compounds, modified polyester compounds, carboxyl group-containing polymers, maleic acid-based polyanions, polycarboxylic acid esters, multi-chain nonionic polymers, phosphoric acid esters, sorbitan fatty acid esters, sodium alkylbenzene sulfonate, and maleic acid-based compounds. Other examples include those described at page 22, lines 10 to 25 in International Application Publication No. WO2002-085590A1. In addition, a non-reactive dispersion medium can also be used as the dispersion medium. Examples of the non-reactive dispersion medium include hydrocarbons such as xylene, ethers, diethylene glycol butyl ether (butyl carbitol), diethylene glycol butyl ether acetate (butyl carbitol acetate), terpineol, 2-ethylhexanol, isopropanol, and acetone. (Gelling agent)

A gelling agent reacts with the reactive functional group contained in the dispersion medium to cause solidification. Examples the gelling agent are described at page 21 to page 22 line 9 in WO2002-085590A1. In addition, the gelling agents described below can also be used.

Preferably, the gelling agent has a viscosity of 3,000 cps or less at 20°C. Specifically, preferably, the slurry is solidified by chemical bonding between an organic dispersion medium having two or more ester groups and a gelling agent having an isocyanate group and/or an isothiocyanate group.

More specifically, the reactive gelling agent is a substance capable of chemically bonding with the dispersion medium to solidify the slurry. Accordingly, the gelling agent may be any substance that has a reactive functional group capable of chemically reacting with the dispersion medium in its molecule. For example, the gelling agent may be a monomer, an oligomer, or a prepolymer capable of three-dimensionally crosslinking by the addition of a crosslinking agent (e.g., polyvinyl alcohol, an epoxy resin, a phenol resin, or the like).

From the standpoint of securing the fluidity of the slurry, preferably, the reactive gelling agent has a low viscosity, specifically, a viscosity of 3,000 cps or less at 20°C.

A prepolymer or a polymer having a high average molecular weight generally has a high viscosity. Thus, in the present invention, preferably, a monomer or an oligomer having a lower molecular weight, specifically, an average molecular weight (measured by GPC) of 2,000 or less, is used. Here, the term "viscosity" means a viscosity of the gelling agent itself (viscosity of 100% gelling agent) and does not mean the viscosity of a commercially available diluted gelling solution (e.g., aqueous solution of a gelling agent).

Preferably, the reactive functional group of the gelling agent is appropriately selected in consideration of the reactivity with the reactive dispersion medium. For example, when an ester having relatively low reactivity is used as the reactive dispersion medium, it is preferable to select a gelling agent having an isocyanate group (-N=C=O) and/or an isothiocyanate group (-N=C=S) with high reactivity.

Isocyanates are generally reacted with diols and diamines. In many cases, diols have high viscosity as described above. Diamines have excessively high reactivity, which may cause solidification of a slurry before casting, in some cases.

From the standpoint described above, preferably, the slurry is solidified by reaction of a reactive dispersion medium having an ester group and a gelling agent having an isocyanate group and/or an isothiocyanate group. In order to obtain a more satisfactory solidification state, more preferably, the slurry is solidified by reaction of a reactive dispersion medium having two or more ester groups and a gelling agent having an isocyanate group and/or an isothiocyanate group. Furthermore, it is effective to use a diol or a diamine, in an amount that does not greatly increase the viscosity of the slurry, for the purpose of reinforcement.

Examples of the gelling agent having an isocyanate group and/or an isothiocyanate group include 4,4'-diphenylmethane diisocyanate (MDI)-based isocyanate (resin), hexamethylene diisocyanate (HDI)-based isocyanate (resin), tolylene diisocyanate (TDI)-based isocyanate (resin), isophorone diisocyanate (IPDI)-based isocyanate (resin), and isothiocyanate (resin).

Furthermore, in view of chemical characteristics, such as compatibility with the reactive dispersion medium, preferably, other functional groups are introduced into the basic chemical structure described above. For example, in the case of reaction with an ester-containing reactive dispersion medium, it is preferable to introduce a hydrophilic functional group from the standpoint of enhancing compatibility with the ester to improve homogeneity at the time of mixing.

Moreover, a reactive functional group other than an isocyanate group or an isothiocyanate group may be introduced into the molecule of the gelling agent. An isocyanate group and an isothiocyanate group may coexist. Furthermore, as in a polyisocyanate, many reactive functional groups may be present.

A molding slurry for forming an inorganic powder-containing molded body may be prepared, for example, as follows. First, a starting material powder is dispersed in a dispersion medium to form a slurry, and then a gelling agent is added thereto. Alternatively, a starting material powder and a gelling agent are simultaneously added to a dispersion medium to form a slurry. In view of workability during casting and the like, the viscosity of the slurry at 20°C is preferably 30,000 cps or less, and more preferably 20,000 cps or less. The viscosity of the slurry may be adjusted by controlling the viscosities of the above-described reactive dispersion medium and gelling agent, the type of powder, the amount of the dispersant, and the slurry concentration (percent by volume of the powder relative to the total volume of the slurry). Usually, the slurry concentration is preferably in a range of 25 to 75 percent by volume, and more preferably in a range of 35 to 75 percent by volume in view of reducing cracks due to drying shrinkage.

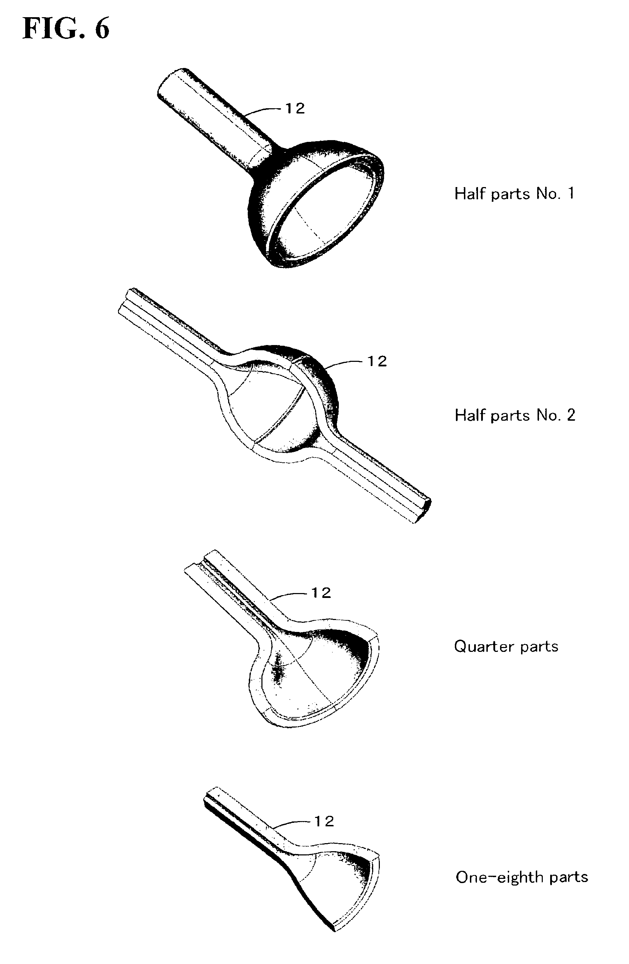

When a molded body is produced using such an inorganic powder-molding slurry, preferably, body parts are prepared so that a joined body having a shape corresponding to a desired sintered body 2 can be easily obtained. For example, Fig. 6 shows various examples of a molded body part 12 that can be used for producing an arc tube similar to that shown in Fig. 1. Furthermore, with respect to a reaction tube or a flow channel, for example, Fig. 5 shows a joined body bisected into two body parts (half parts No. 1) in a direction perpendicular to the flow channel direction and a joined body bisected into two body parts (half parts No. 2) along the flow channel direction. (Preparation of bonding slurry)

In order to obtain a joined body, first, a bonding slurry for bonding inorganic powder-molded bodies to each other is prepared. The bonding slurry is preferably a non-self-curing slurry that is not solidified by chemical reaction. When the bonding slurry is a non-self-curing slurry, it is possible to easily maintain a state in which surface tension acts, and a junction (after drying and after sintering) having a low surface roughness can be obtained by the action of surface tension. Furthermore, since the bonding slurry layer is formed in a state in which surface tension acts, it is possible to easily control the shape of the bonding slurry layer so that the shape of cross-section of the resulting junction (after sintering) can be controlled.

It is possible to use, as the bonding slurry, the starting material powder and the nonreactive dispersion medium that can be used for the molding slurry described above, and various binders, such as polyvinyl acetal resins (e.g., trade names: BM-2, BM-S, and BL-S, which are all manufactured by Sekisui Chemical Co., Ltd.) and ethyl cellulose (e.g., trade name: Ethocel). As necessary, it may be possible to use a dispersant, such as bis (2-ethylhexyl)phthalate (DOP) and an organic solvent, such as acetone or isopropanol, for adjusting viscosity during mixing.

The bonding slurry can be obtained by a usual method of preparing a ceramic paste or slurry in which starting material powder, a solvent, and a binder are mixed using a tri-roll mill, a pot mill, or the like. A dispersant and an organic solvent may be mixed thereto according to need. Specifically, it is possible to use diethylene glycol butyl ether (butyl carbitol), diethylene glycol butyl ether acetate (butyl carbitol acetate), terpineol, or the like. Preferably, the viscosity of the bonding slurry is 500,000 cps or less at 20°C. In such a range, it is possible to increase the feeding thickness of the bonding slurry while maintaining surface tension suitable for forming a bonding slurry layer. More preferably, the viscosity of the bonding slurry is 300, 000 cps or less. In such a range, it is possible to define the shape of the bonding slurry fed. The viscosity of the slurry can also be adjusted by the amounts of the dispersion medium and the dispersant described above and the slurry concentration (percent by weight of powder relative to the total volume of the slurry; hereinafter, the concentration is stated in terms of percent by weight). Usually, the slurry concentration is preferably 25 to 90 percent by weight. In view of reducing cracks due to firing shrinkage, the slurry concentration is more preferably 35 to 90 percent by weight.

### (Formation of joined body)

Next, a joined body is formed by bonding two or more inorganic powder-molded bodies prepared to each other using the bonding slurry. (Formation of bonding slurry layer)

In order to obtain a joined body, first, a bonding slurry layer is formed between a joint surface of a first inorganic powder-molded body and a joint surface of a second inorganic powder-molded body, using a bonding slurry while maintaining a state in which surface tension acts. The bonding slurry may be fed between the joint surfaces with the surfaces (joint surfaces) of the two inorganic powder-containing molded bodies to be bonded being opposed to each other. Alternatively, the bonding slurry may be fed to one or both of the joint surfaces of the inorganic powder-molded bodies.

In order to feed the bonding slurry between the joint surfaces of the inorganic powder-molded bodies, a known method which uses a dispenser or the like may be used. In order to feed the bonding slurry to the joint surfaces of the inorganic powder-molded bodies, in addition to a known liquid feed method, such as a method using a dispenser, a dipping method, or a spray method, a printing method, such as screen-printing or metal mask printing, may be used. The fed bonding slurry is pressed between the molded bodies to form a junction between the joined bodies. In screen-printing, the bonding slurry can be fed to the joint surface by controlling the thickness and pattern with high accuracy, and as a result, it is possible to obtain a bonding slurry layer and a junction with high accuracy. In metal mask printing, the bonding slurry is easily fed to the joint surfaces at a certain thickness, thus facilitating the shape control of the bonding slurry layer and the junction.

For example, when the thickness of the bonding slurry layer disposed on the joint surface of the inorganic powder-molded body is 200 µm or less (preferably 10 µm or more), it is preferable to feed the bonding slurry by screen-printing. In screen-printing, it is possible to feed the bonding slurry with high accuracy and at a uniform thickness. Thus, it is possible to obtain a bonding slurry layer having uniform width and thickness, and consequently, it is possible to obtain a junction (second component 20) with accuracy. When the thickness of the bonding slurry layer disposed on the joint surface of the inorganic powder-molded body is 500 µm or less (preferably exceeding 200 µm), it is possible to form a bonding slurry pattern with accuracy on the joint surface, using metal mask printing. As a result, a satisfactory junction (second component 20) can be obtained. When the thickness of the bonding slurry layer disposed on the joint surface of the inorganic powder-molded body is 2,000 µm or less (preferably exceeding 500 µm), it is preferable to use metal mask printing. In metal mask printing, it is possible to easily form a slurry layer at a certain thickness, and by controlling the distance between the inorganic powder-molded bodies, the variation in thickness can be reduced.

When a known liquid feeding method or a printing method, such as screen printing or metal mask printing, is employed, conditions may be appropriately set according to the viscosity, feeding thickness, etc. of the bonding slurry to be applied.

In order to form a slurry layer using a bonding slurry while maintaining a state in which surface tension acts, after feeding the bonding slurry between the joint surfaces of the inorganic powder-molded bodies or feeding the bonding slurry to the joint surfaces, the distance between the inorganic powder-molded bodies is maintained at an intended value without drying. In the case where the bonding slurry is a non-self-curing bonding slurry, after feeding the bonding slurry to the joint surfaces or the like and before drying, a state in which surface tension can act is easily maintained for a certain period of time.

While maintaining the state in which surface tension acts on the bonding slurry as described above, by controlling or changing the distance between the joint surfaces of the inorganic powder-molded bodies, applying oscillation to the workpiece, allowing the workpiece to revolve, or moving the inorganic powder-molded bodies relative to each other in a direction substantially horizontal to the joint surfaces, the shape of the bonding slurry layer can be adjusted. Examples of the shape of the bonding slurry layer include the shapes shown in Figs. 3(a) to 3(b). In particular, by adjusting the load applied to the junction surfaces in a perpendicular direction and/or securing the distance between the joint surfaces, the shape of the bonding slurry layer can be easily controlled, and a bonding slurry layer with decreased surface roughness can be formed using surface tension. Consequently, it is possible to obtain a sintered body having low surface roughness and satisfactory transmittance. (Drying step)

After the bonding slurry layer is formed between the joint surfaces of the inorganic powder-molded bodies which are opposed to each other, the bonding slurry layer is dried. The drying step may be carried out along with the step of forming the bonding slurry layer. That is, while forming the bonding slurry layer with the distance between the joint surfaces being adjusted or the like, the bonding slurry layer may be dried simultaneously. Alternatively, the drying step may be carried out after the bonding slurry layer is formed. The conditions for the drying step can be set appropriately according to the composition of the bonding slurry, the amount of the bonding slurry fed, etc. Usually, the drying step can be carried out at 40°C to 200°C for about 5 to 120 minutes. In the case of drying accompanied with forced ventilation, such as blowing, the drying step can be carried out at 40°C to 200°C for about 1 to 120 minutes.

In the resulting joined body, at least two inorganic powder-molded bodies are bonded to each other by the (dried) junction obtained by drying the bonding slurry layer. In the formation of the joined body described above, an example in which two inorganic powder-molded bodies are bonded to each other is described. However, the present invention is not limited thereto, and a joined body including three or more inorganic powder-molded bodies may be obtained by forming bonding slurry layers simultaneously or sequentially to perform bonding.

### (Manufacturing method of sintered body)

Next, the joined body is fired to sinter the sinterable components in the inorganic powder-molded bodies and the junction (after drying). Thereby, a sintered body is obtained. Prior to the sintering step, the joined body may be subjected to degreasing or calcining. The degreasing step and the calcining step is preferably performed in a reducing atmosphere. The sintering step is also preferably performed in a reducing atmosphere. The reducing atmosphere is typically composed of hydrogen and may contain inert gas.

The firing temperature in the sintering step depends on the material. Preferably, the maximum temperature during sintering is 1,750°C or lower. Although the lower limit of the firing temperature is not particularly limited, the firing temperature may be 1,350°C or higher, and preferably 1,450°C or higher. Furthermore, according to the color tone of the sintered body (e.g., blackening), humidification may be performed appropriately (dew point -10°C to +10°C).

In a preferred embodiment, a joined body is subjected to degreasing at 1,000°C to 1,200°C, and then sintering is performed. The degreasing is preferably performed in an air atmosphere. In such a case, in order to prevent lack of oxygen in the furnace, air or oxygen may be appropriately supplied into the furnace. In particular, the organic components in a molded body obtained by gel-casting are difficult to decompose compared with the organic components in a molded body obtained by an ordinary molding method (e. g., powder compression using a binder, or extrusion). Consequently, the degreasing process described above is effective in accelerating the decomposition of the organic components, and also effective in prevention of blackening. The degreasing time is not particularly limited, but is preferably 30 hours or more, and more preferably 60 hours or more.

Furthermore, according to the color tone of the sintered body, annealing may be performed in air at 1,000°C to 1,500°C. In such a case, in order to prevent lack of oxygen in the furnace, air or oxygen may be appropriately supplied into the furnace.

In the manufacturing method of the sintered body according to the present invention described above, a sintered body of the present invention can be obtained. Furthermore, according to the method of the present invention, it is possible to easily control the surface roughness, transmittance, strength, and shape of the second component corresponding to the junction of joined bodies in the sintered body. Consequently, it is possible to easily improve or enhance the characteristics of the junction, and the characteristics of the sintered body.

It is to be understood that the present invention is not limited to the embodiments described above, and various embodiments within the scope of the technical field of the present invention can be carried out.

### EXAMPLE 1

In this example, an arc tube was produced as a sintered body. A molded body constituting the sintered body was formed by the method described below. That is, 100 parts by weight of alumina powder (trade name: Alumina AES-11C, manufactured by Sumitomo Chemical Company) and 0.025 parts by weight of magnesia, as starting material powder, 24 parts by weight of dimethyl malonate as a dispersion medium, 2 parts by weight of Bayhydur 3100 (trade name, manufactured by Bayer-Sumitomo Urethane K.K.) as a gelling agent, 1 part by weight of MALIALIM AKM0351 (trade name, manufactured by NOF Corporation) as a dispersant, and 0.2 parts by weight of triethylamine as a catalyst were mixed. The resulting slurry was poured into an aluminum alloy mold, and the cast slurry was left to stand at room temperature for one hour and then at 40°C for 30 minutes to carry out solidification, followed by mold releasing. The solidified pieces were left to stand at room temperature and at 90°C, respectively, for 2 hours. Thus, powder-molded bodies, each having a shape corresponding to a half part of an arc tube for a metal halide lamp bisected in a direction perpendicular to the axial direction, were obtained.

A bonding slurry was prepared as follows. That is, alumina powder (100 parts by weight) and magnesia powder (0.025 parts by weight) as starting material powder, acetone (100 parts by weight), butyl carbitol (30 parts by weight), and a polyvinyl acetal resin (BM-2, manufactured by Sekisui Chemical Co., Ltd.) (8.5 parts by weight) were mixed to produce a bonding slurry.

A screen printing plate (emulsion thickness: 100 µm, #290 mesh, ring-shaped pattern with an inner diameter of 12.8 mm and an outer diameter of 13.7 mm) was used. The screen printing plate was fixed on a screen printer stage so as to be parallel to the joint surfaces (inner diameter: 12.5 mm, outer diameter: 14.0 mm) of the molded bodies, and alignment was performed. Subsequently, the bonding slurry prepared as described above was fed to the joint surfaces of the molded bodies by a screen printer using the screen printing plate.

In order to measure the thickness of the bonding slurry applied, the bonding slurry was dried. The thickness of the dried bonding slurry layer was 100±20 µm, and it was confirmed that the bonding slurry was applied at a uniform thickness.

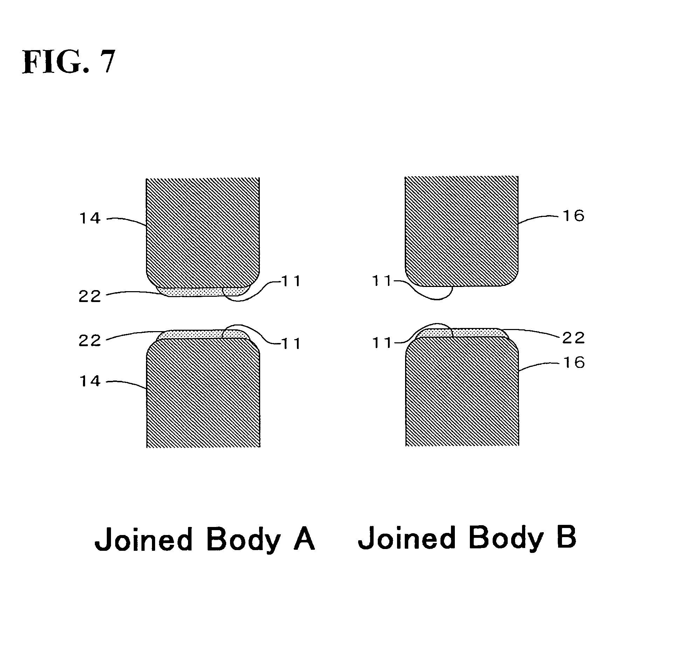

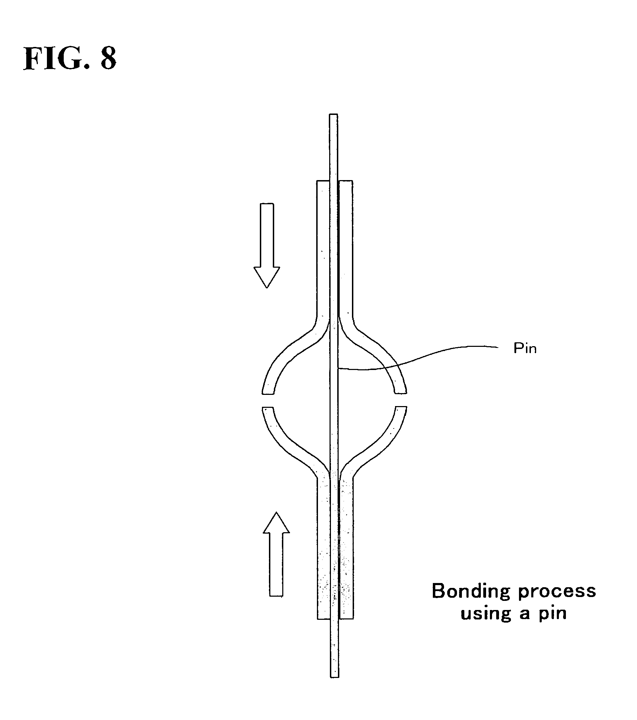

As shown in Fig. 7, a pair of molded bodies 14 in which a bonding slurry 22 was applied to a joint surface 11 of each molded body 14 and a pair of molded bodies 16 in which a bonding slurry 22 was applied to only a joint surface 11 of one molded body were prepared. Furthermore, as shown in Fig. 8, a pin was allowed to penetrate tube portions of two molded bodies such that the joint surfaces of the individual molded bodies were opposed to each other. Then, the joint surfaces were brought into contact with each other such that surface tension acted on the bonding slurry applied to each joint surface to form a bonding slurry layer. Subsequently, drying was performed with an oven at 80°C for 10 minutes. Two joined bodies A and B were thereby obtained.

The resulting joined bodies A and B were calcined in air at 1,100°C, and then fired in an atmosphere of hydrogen and oxygen (hydrogen:oxygen = 3:1) at 1,800°C to increase density and transmittance. Thus, from the joined bodies A and B, sintered bodies (arc tubes) A and B with an outer diameter of a middle part of 14 mm and a capillary length of 17 mm were obtained. The thermal shock resistance was evaluated by a water quenching method. As a result, no cracks occurred in the sintered bodies A and B even at 150°C, which indicated that the thermal shock resistance was at the same level as that in arc tubes with the same shape produced by an integral molding method. Furthermore, with respect to the sintered bodies A and B, after the evaluation of thermal shock resistance, the amount of He leak at the middle part was measured by a He leak detector. The amount of leak was 1 x 10⁻⁸ atm·cc/sec or less in each sintered body.

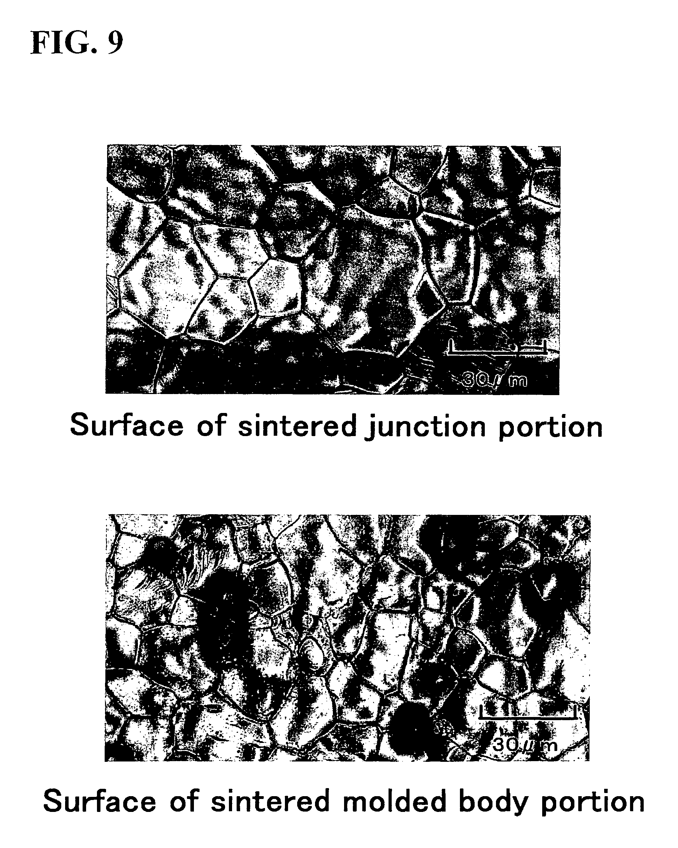

Furthermore, in each of the sintered bodies A and B, the surface of a sintered portion corresponding to a junction (hereinafter also referred to as a "sintered junction portion") and the surface of a sintered portion corresponding to a molded body (hereinafter also referred to as a "sintered molded body portion") were observed with a laser scanning microscope (OLS1100 manufactured by Olympus Corporation). In each of the sintered bodies A and B, a very smooth surface was formed in the sintered portion corresponding to the junction. In contrast, in the sintered portion corresponding to the molded body, recesses were partially observed, and besides the recesses, the degree of irregularities was higher than that in the sintered junction portion. With respect to each of the sintered bodies A and B, the surface roughness was measured at three points in an arbitrary cross-section (cutoff value: 85.4 µm). As a result, in the sintered body A, the surface roughness Ra was 0.17 µm in the sintered junction portion and 1.23 µm in the sintered molded body portion. In the sintered body B, the surface roughness Ra was 0.19 µm in the sintered junction portion and 1.27 µm in the sintered molded body portion. Furthermore, in each of the sintered bodies A and B, it was visually confirmed that the sintered junction portion obviously had a higher transmittance than the sintered molded body portion. The observation results with respect to the sintered body A are shown in Fig. 9. Furthermore, the average grain diameter in the sintered molded body portion was 21.3 µm, and the average grain diameter in the vicinity of the center in the width direction of the sintered junction portion was 29.2 µm. The average grain diameter in the vicinity of a position at a distance of 150 µm from the center in the width direction of the sintered junction portion toward the sintered molded body portion was 23.6 µm. That is, the average grain diameter showed a tendency of decreasing with a gradient from the center of the sintered junction portion toward the joint surface of the sintered molded body portion. The average grain diameter is obtained by the method described below. First, a surface of the sintered body was photographed using the laser scanning microscope described above in a field of view which contained about 20 to 200 crystal grains, and the total number of crystal grains contained in the resulting micrograph was counted. At this time, a crystal grain present in the periphery of the field of view was counted as 0.5 pieces. Subsequently, the area of the field of view was divided by the total number of crystal grains contained in the field of view to give an average grain cross-section area. Assuming that the grain cross section was circular, the diameter was calculated from the average grain cross-section area. This value was considered as an average grain diameter.

### EXAMPLE 2

In Example 2, an arc tube was produced as a sintered body. A molded body constituting the sintered body was formed by the method described below. That is, 100 parts by weight of alumina powder (trade name: Alumina AKP-20, manufactured by Sumitomo Chemical Company) and 0.025 parts by weight of magnesia, as starting material powder, 27 parts by weight of Chemrez 6080 (trade name, manufactured by Hodogaya Ashland Co., Ltd.) and 0.3 parts by weight of ethylene glycol, as a dispersion medium, 4 parts by weight of SBU Isocyanate 0775 (trade name, manufactured by Bayer-Sumitomo Urethane K.K.) as a gelling agent, 3 parts by weight of MALIALIM AKM0351 (trade name, manufactured by NOF Corporation) as a dispersant, and 0.1 parts by weight of Kaolizer No. 25 (trade name, manufactured by Kao Corporation) as a catalyst were mixed. The resulting slurry was poured into the same mold as that in Example 1, and the cast slurry was left to stand at room temperature for one hour and then at 40°C for 30 minutes to carry out solidification, followed by mold releasing. The solidified pieces were left to stand at room temperature and at 90°C, respectively, for 2 hours. Thus, powder-molded bodies, each having a shape corresponding to a half part of an arc tube for a metal halide lamp bisected in a direction perpendicular to the axial direction, were obtained. The powder packing ratio measured was 44.0 percent by volume. The powder packing ratio was calculated from a firing shrinkage ratio obtained when a molded body equivalent to this molded body was fired without bonding.

A bonding slurry was prepared as follows. That is, alumina powder (100 parts by weight) and magnesia powder (0.025 parts by weight) as starting material powder, terpineol (35 parts by weight), and a binder (BL-S, manufactured by Sekisui Chemical Co., Ltd.) (8.5 parts by weight) were mixed to produce a bonding slurry. The powder packing ratio of the bonding slurry during application, which was calculated from the number of parts by weight of the individual components and the density, was 35.5 percent by volume. However, it is considered that the packing ratio would largely increase after drying because of a decrease in weight due to volatilization and diffusion of organic components, etc.

Using the same screen printing plate as that in Example 1, a plurality of molded bodies in which the bonding slurry was applied to the joint surfaces were formed. The molded bodies were bonded to each other in the same manner as in Example 1 to produce a joined body A (refer to Fig. 7). In Example 2, a plurality of joined bodies A were formed and the dry state of the bonding slurry was checked. The bonding slurry was in the liquid form immediately after application to the molded bodies. Five minutes after bonding two molded bodies, the bonded molded bodies were separated by pulling, the bonding slurry was in a substantially dry state even without drying with an oven (at 80°C for 10 minutes) in Example 2. The joined body A was fired as in Example 1, and thereby a sintered body A of Example 2 was obtained.

With respect to the sintered body A of Example 2, the thermal shock resistance was evaluated by the water quenching method. As a result, no cracks occurred in the sintered body A even at 150°C. Furthermore, with respect to the sintered body A, after the evaluation of thermal shock resistance, the amount of He leak at the middle part was measured by a He leak detector. The amount of leak was 1 x 10⁻⁸ atm·cc/sec or less. Furthermore, in Example 2, the average grain diameter in the sintered molded body portion was 22.5 µm, and the average grain diameter in the vicinity of the center in the width direction of the sintered junction portion was 28.7 µm. The average grain diameter in the vicinity of a position at a distance of 150 µm from the center in the width direction of the sintered junction portion toward the sintered molded body portion was 24.7 µm.

### EXAMPLE 3

A sintered body A of Example 3 was obtained as in Example 2 except that the amount of magnesia in the bonding slurry was 0.020 parts by weight. The thermal shock resistance of the sintered body A of Example 3 was evaluated by the water quenching method. As a result, no cracks occurred in the sintered body A even at 150°C. Furthermore, with respect to the sintered body A, after the evaluation of thermal shock resistance, the amount of He leak at the middle part was measured by a He leak detector. The amount of leak was 1 x 10⁻⁸ atm·cc/sec or less. Furthermore, in Example 3, the average grain diameter in the sintered molded body portion was 24.3 µm, and the average grain diameter in the vicinity of the center in the width direction of the sintered junction portion was 47.5 µm. The average grain diameter in the vicinity of a position at a distance of 150 µm from the center in the width direction of the sintered junction portion toward the sintered molded body portion was 34.1 µm.

The present invention claims the priority to Japanese Patent Application No. 2006-082676 filed on March 24, 2006, Japanese Patent Application No. 2006-197393 filed on July 19, 2006, Japanese Patent Application No. 2006-297706 filed on November 1, 2006, and Japanese Patent Application No. 2007-070277 filed on March 19, 2007, contents of all of which are incorporated herein by reference in their entirety.

### Industrial Applicability

The present invention is applicable in the field of manufacturing of a joined body of ceramics and a sintered body the joined body.

## Claims

1. A sintered body of a joined body including two or more inorganic powder-molded bodies, the sintered body comprising:
first components corresponding to the two or more inorganic powder-molded bodies in the joined body; and
a second component corresponding to a junction in the joined body,
wherein the sintered body has one or both of the features (a) and (b):
(a) the second component has a surface roughness equal to or lower than that of each of the first components; and
(b) the second component has, in the vicinity of a width center thereof, a transmittance equal to or higher than that of each of the first components.

2. The sintered body according to Claim 1, wherein the second component has a surface roughness satisfying the relationship 0.01 µm ≤ Ra ≤ 2 µm.

3. The sintered body according to Claim 1 or 2, wherein the second component has, in the vicinity of a width center thereof, a transmittance of 80% or more.

4. A sintered body of a joined body including two or more inorganic powder-molded bodies, the sintered body comprising:
first components corresponding to the two or more inorganic powder-molded bodies in the joined body; and
a second component corresponding to a junction in the joined body,
wherein the second component has a surface roughness satisfying the relationship 0.01 µm ≤ Ra ≤ 2 µm and/or the second component has, in the vicinity of a width center thereof, a transmittance of 80% or more.

5. The sintered body according to any one of Claims 1 to 4, wherein the second component does not protrude from the surface of the sintered body, exceeding the surface of each of the first components.

6. The sintered body according to any one of Claims 1 to 5, wherein the second component has a width in a range of 10 to 2,000 µm.

7. The sintered body according to any one of Claims 1 to 6, wherein the ratio of the width of the second component to the thickness of each of the first components is 1 or less.

8. The sintered body according to any one of Claims 1 to 7, wherein the sintered body has a hollow portion.

9. The sintered body according to any one of Claims 1 to 8, wherein the ratio of the average grain diameter of the second component to the average grain diameter of each of the first components is in a range of 1.0 to 2.0.

10. The sintered body according to Claim 9, wherein the average grain diameter of the second component has a tendency to decrease from the center in the width direction of the second component toward each of the first components.

11. A method for manufacturing a joined body including inorganic powder-molded bodies, the method comprising the steps of:
forming a bonding slurry layer at least between a joint surface of a first inorganic powder-molded body and a joint surface of a second inorganic powder-molded body while maintaining a state in which surface tension acts, the bonding slurry layer being made of a non-self-curing bonding slurry containing inorganic powder; and
drying the bonding slurry layer.

12. The method according to Claim 11, wherein, in the step of forming the bonding slurry layer, the bonding slurry layer is formed while adjusting a distance between the joint surface of the first inorganic powder-molded body and the joint surface of the second inorganic powder-molded body, the distance being in a direction substantially perpendicular to the joint surfaces.

13. The method according to Claim 11 or 12, further comprising, prior to the step of forming the bonding slurry layer, a step of feeding the non-self-curing bonding slurry containing inorganic powder to at least one of the joint surface of the first inorganic powder-molded body and the joint surface of the second inorganic powder-molded body.

14. The method according to Claim 13, wherein, in the step of feeding the non-self-curing bonding slurry, the non-self-curing bonding slurry is applied to the at least one of the joint surfaces by printing.

15. A method for manufacturing a sintered body comprising the steps of:
forming a bonding slurry layer at least between a joint surface of a first inorganic powder-molded body and a joint surface of a second inorganic powder-molded body while maintaining a state in which surface tension acts, the bonding slurry layer being made of a non-self-curing bonding slurry containing inorganic powder;
drying the bonding slurry layer; and
sintering a joined body in which the first inorganic powder-molded body and the second inorganic powder-molded body are bonded to each other with the dried bonding slurry layer therebetween.

16. A sintered body manufactured by the method according to Claim 15.

17. An arc tube comprising the sintered body according to any one of Claims 1 to 10 and 16.

18. The arc tube according to Claim 17, wherein the arc tube is an arc tube for a metal halide lamp.

19. The arc tube according to Claim 17, wherein the arc tube is an arc tube for a high-pressure sodium lamp.
